# EUROPEAN PATENT APPLICATION

(11) **EP 3 878 718 A1**
(43) Date of publication of application: **15.09.2021**
(21) Application number: 21162283.2
(22) Date of filing: 12.03.2021
(51) Int. Cl.: B62D 15/02, G08G 1/123

(54) **REMOTE CONTROL DETERMINATION DEVICE AND REMOTE CONTROL DETERMINATION SYSTEM**

(30) Priority: 13.03.2020 JP 2020043733
(71) Applicant: Faurecia Clarion Electronics Co., Ltd., Saitama-shi, Saitama 330-0081 (JP)
(72) Inventor: NAKAGAWA, Yuichiro, SAITAMA, 330-0081 (JP)
(74) Representative: Lavoix

(57) **Abstract**

A remote control determination device (350) includes a communication portion (250) that is configured to receive an acceleration detected by an acceleration portion (120) of a remote control terminal (100) that is independent of a vehicle (200) when an automatic parking operation is remotely performed for the vehicle (200) by an operation to the remote control terminal (100), and an error detector (340) that is configured to determine whether or not to remotely perform the automatic parking operation for the vehicle (200) based on the acceleration received by the communication portion (250).

## Description

### BACKGROUND ART

A present disclosure relates to a remote control determination device and a remote control determination system.

A prior art that remotely performs automatic parking for a vehicle has been proposed in JP2016-538780A, for example. The automatic parking is performed when a driver or operator outside the vehicle traces a graphic displayed on a screen of a smartphone with his or her finger.

For example, if the automatic parking is set to be started when the operator presses a switch or button of a remote control terminal only once, the operator may not look at the remote control terminal and the vehicle after pressing the switch or button. The prior art disclosed in JP2016-538780A prevents such a condition.

Specifically, the operator must keep moving his or her finger without removing it from the graphic on the screen of the smartphone. This can keep the operator aware that the automatic parking is in operation.

### SUMMARY

However, in the prior art disclosed in JP2016-538780A, the operator tends to focus on the screen of the smartphone too much. Accordingly, the operator takes his or her eyes off the vehicle, resulting in less attention to the vehicle.

Further, in the prior art disclosed in JP2016-538780A, the smartphone may malfunction when raindrops or the like are on the screen of the smartphone. For example, a response (output) to the touch operation (input) to the screen may become deteriorated.

An object of the present disclosure is to provide a remote control determination device and a remote control determination system that prevent or suppress the operator from lacking his or her attention to the vehicle during the automatic parking operation.

A remote control determination device of the present disclosure includes a communication portion that is configured to receive an acceleration detected by an acceleration portion of a remote control terminal that is independent of a vehicle when an automatic parking operation is remotely performed for the vehicle through an operation to the remote control terminal, and an error detector that is configured to determine whether or not to remotely perform the automatic parking operation for the vehicle based on the acceleration received by the communication portion.

A remote control determination system of the present disclosure includes the remote control determination device of the present disclosure, and a remote control terminal that is independent of a vehicle and comprises an acceleration portion.

### Advantageous Effects

The remote control determination device and the remote control determination system of the present disclosure can prevent or suppress the operator from lacking his or her attention to the vehicle during the automatic parking operation.

### BRIEF DESCRIPTION OF DRAWINGS

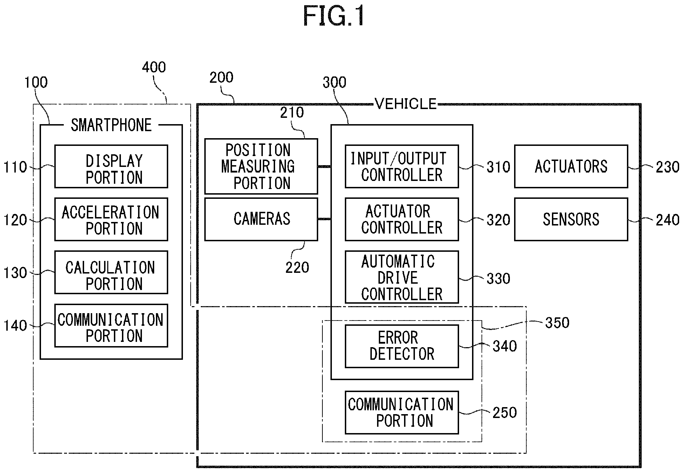

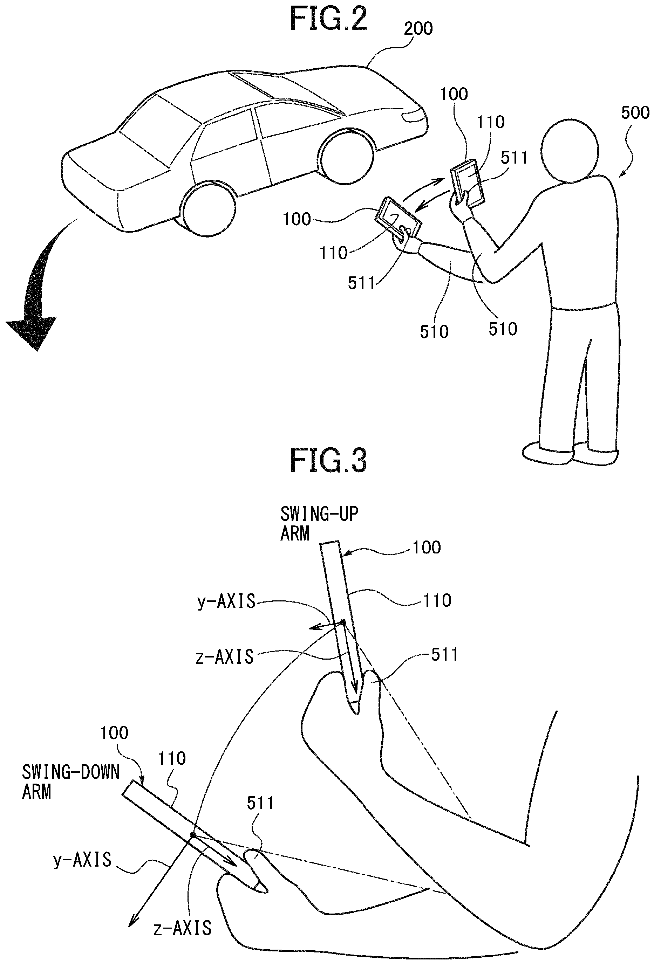

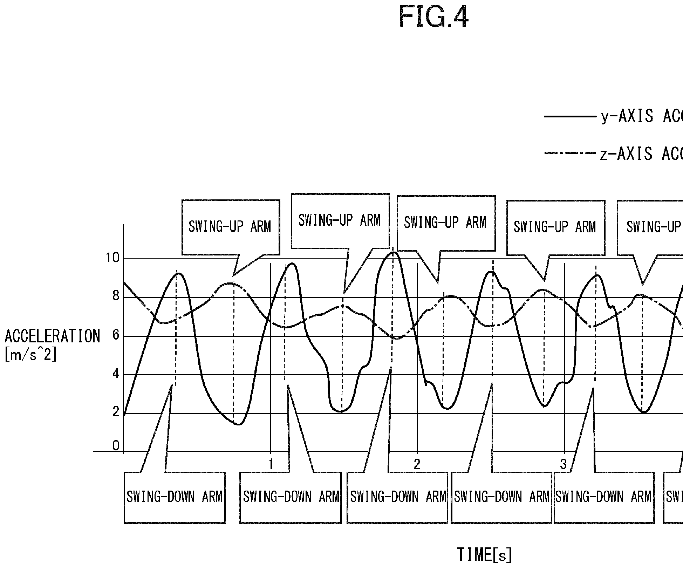

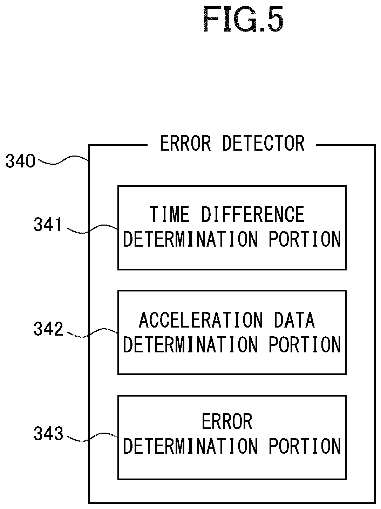

FIG. 1 is a block diagram illustrating a remote control determination device and a remote control determination system according to an embodiment of the present disclosure. FIG. 2 is a schematic view illustrating an operator outside a vehicle who is performing a remote automatic parking operation for the vehicle via an operation to a smartphone. FIG. 3 is a schematic view illustrating the relationship between a motion to swing an arm by the operator and a direction of acceleration on the smartphone. FIG. 4 is a graph illustrating changes in the acceleration in a y-axis direction and the acceleration in a z-axis direction acting on the smartphone over time. FIG. 5 is a block diagram illustrating the configuration of an error detector.

### DESCRIPTION OF EMBODIMENTS

With respect to the use of plural and/or singular terms herein, those having skill in the art can translate from the plural to the singular and/or from the singular to the plural as is appropriate to the context and/or application. The various singular/plural permutations may be expressly set forth herein for sake of clarity.

Hereinafter, an embodiment of a remote control determination device and a remote control determination system of the present disclosure will be described with reference to the drawings.

FIG. 1 is a block diagram illustrating a remote control determination device 350 and a remote control determination system 400 according to an embodiment of the present disclosure.

The remote control determination system 400 shown in the figures is configured to determine whether or not a parking assist device 300 of a vehicle 200 can be remotely operated by an operation to a smartphone 100. The remote control determination system 400 includes the remote control determination device 350 provided in the vehicle 200 and the smartphone 100 independent of the vehicle 200.

The remote control determination device 350 includes an error detector 340 and a communication portion 250. The smartphone 100 includes a display portion 110, an acceleration portion (acceleration module) 120, a calculation portion 130, and a communication portion 140. The display portion 110 includes a screen.

The smartphone 100 is an example of a remote control terminal that launches the operation of the parking assist device 300 for the vehicle 200. The remote control terminal is not limited to the smartphone 100 and may be any terminal that is carried by an operator 500 and receives an output for launching the automatic parking operation for the vehicle 200 by the parking assist device 300.

The parking assist device 300 of the vehicle 200 includes an input/output controller 310, an actuator controller 320, an automatic drive controller 330, and the error detector 340. The parking assist device 300 is configured to control actuators 230 of the vehicle 200 to park the vehicle 200 in a predetermined parking space or area by the automatic driving operation in accordance with the position and direction of the vehicle 200 detected by a position measuring portion (position measuring module) 210 in the vehicle 200, obstacles and parking spaces around the vehicle 200 detected by cameras (camera module) 220, and the operation states of the actuators 230 for driving, braking and steering systems detected by sensors 240.

Further, the parking assist device 300 outputs a signal for stopping the automatic parking operation to the automatic drive controller 330 when determining that the error detector 340 detects an error or malfunction of the automatic parking operation and stops the automatic parking operation. On the other hand, the parking assist device 300 controls the automatic drive controller 330 to continue an automatic drive operation when determining that the error detector 340 does not detect an error or malfunction of the automatic parking operation. In other words, the error detector 340 determines whether the automatic parking operation can be performed or not.

FIG. 2 is a schematic view illustrating the operator 500 outside the vehicle 200 who is performing the remote automatic parking operation for the vehicle 200 via an operation to the smartphone 100. FIG. 3 is a schematic view illustrating the relationship between a motion to swing an arm 510 by the operator 500 and a direction of acceleration acting on the smartphone 100. FIG. 4 is a graph illustrating changes in the acceleration in a y-axis direction and the acceleration in a z-axis direction acting on the smartphone 100 over time.

As shown in FIG. 2, the parking assist device 300 of the present disclosure remotely operates the vehicle 200 to automatically park the vehicle in response to a predetermined operation to the smartphone 100 by the operator 500.

Specifically, the operator 500 holds the smartphone 100 with one of his or her arms 510 (hands) and periodically moves or swings, at a predetermined angle, his or her forearm of the arm 510 that holds the smartphone 100 while touching the screen of the display portion 110 with at least one finger 511. In response to this operation, the parking assist device 300 performs the automatic parking operation.

The acceleration portion 120 of the smartphone 100 detects the acceleration acting on the smartphone 100 caused by swinging the smartphone 100 by the operator 500. As shown in FIG. 3, the acceleration portion 120 is configured to detect the acceleration in a normal direction (y-axis direction) of the screen of the display portion 110 and the acceleration in a substantially vertical direction (the z-axis direction) of the screen of the display portion 110 at respective predetermined time intervals (e.g., at least 100 [msec] interval), for example.

As can be seen from the graph shown in FIG. 4, the fluctuation cycle of the acceleration in the y-axis direction is coincident with the fluctuation cycle of the acceleration in the z-axis direction. Also, the acceleration in the z-axis direction shows the minimum value at a timing when the acceleration in the y-axis direction shows the maximum value, while the acceleration in the z-axis direction shows the maximum value at a timing when the acceleration in the y-axis direction shows the minimum value.

When the operator swings or moves the smartphone 100 around his or her elbow as shown in FIG. 3, the smartphone 100 is affected by centrifugal force in the radially outward direction centered on the elbow and also by gravity continuously. Accordingly, the centrifugal force and the gravity are vectorially added to the acceleration in the y-axis direction and the acceleration in the z-axis direction detected by the acceleration portion 120.

On the premise that the finger 511 is touching the screen of the display portion 110, the calculation portion 130 of the smartphone 100 adds the acceleration in the y-axis direction and the acceleration in the z-axis direction detected by the acceleration portion 120 at respective timings, relates the added value, which is the result of the addition, to the time when the acceleration portion 120 detects the accelerations, and stores them.

On the premise that the finger 511 is touching the screen of the display portion 110, the communication portion 140 of the smartphone 100 respectively relates the acceleration in the y-axis direction and the acceleration in the z-axis direction detected by the acceleration portion 120 at the respective timings to the detection time when the acceleration portion 120 detects the accelerations and adds the transmission time at the transmission from the communication portion 140 to the acceleration in the y-axis direction, the acceleration in the z-axis direction, and the detection time to transmit them.

The communication portion 250 of the vehicle 200 receives the detection time, the transmission time, the acceleration in the y-axis direction, and the acceleration in the z-axis direction transmitted from the communication portion 140 of the smartphone 100 and outputs the received data to the error detector 340.

FIG. 5 is a block diagram illustrating the configuration of the error detector 340. As shown in FIG. 5, the error detector 340 includes a time difference determination portion 341, an acceleration data determination portion 342, and an error determination portion 343.

The time difference determination portion 341 is configured to determine the time difference or time lag from the time when the communication portion 250 of the remote control determination device 350 receives data transmitted from the communication portion 140 of the smartphone 100. In the case that the time lag is within the predetermined time (e.g., 100 [msec]), the time difference determination portion 341 determines that the transmission and reception status is normal and the data received by the communication portion 250 is used as it is in the acceleration data determination portion 342 as data for determining the suitability of the acceleration.

On the other hand, in the case that the time lag exceeds the predetermined time, the time difference determination portion 341 determines that the transmission and reception status is not normal (i.e., has an error), the data received by the communication portion 250 is not used as the data for determining the suitability of the acceleration in the acceleration data determination portion 342. Then, a signal for stopping the automatic drive operation is output to the automatic drive controller 330 to stop the vehicle 200.

The time difference determination portion 341 stores in advance the difference (reference time difference) between the time of an internal clock of the smartphone 100 and the time of an internal clock of the parking assist device 300 in the vehicle 200 before receiving the acceleration in the y-axis direction and the acceleration in the z-axis direction from the smartphone 100, and compares the time difference detected by the time difference determination portion 341 upon actually receiving and transmitting the acceleration data with the stored reference time difference. Then, the time difference determination portion 341 determines that the transmission and reception status of the data is normal when the time difference upon transmitting and receiving the data is within the predetermined range with respect to the reference time difference and that the transmission and reception status of the data is not normal (or has an error) when the time difference is not within the predetermined range.

Specifically, the time of the internal clock of the smartphone 100 is transmitted from the smartphone 100 to the remote control determination device 350 of the vehicle 200. The time difference determination portion 341 calculates difference between the time when the communication portion 250 receives the time of the internal clock of the smartphone 100 and the time of the internal clock of the parking assist device 300, and stores the difference as the reference time difference.

Also, the communication portion 250 of the remote control determination device 350 transmits the time of the internal clock of the parking assist device 300 to the smartphone 100. The calculation portion 130 of the smartphone 100 calculates difference between the time when the communication portion 140 receives the time of the internal clock of the parking assist device 300 and the time of the internal clock of the smartphone 100, and stores the difference as the smartphone-side reference time difference.

Then, the communication portion 250 of the remote control determination device 350 transmits to the smartphone 100 the reference time difference stored in the time difference determination portion 341. The calculation portion 130 of the smartphone 100 calculates the sum of the transmitted reference time difference and the stored smartphone-side reference time difference.

In the case that the sum is within the predetermined range set in advance, the calculation portion 130 of the smartphone 100 determines that the communication state between the smartphone 100 and the vehicle 200 is normal. On the other hand, in the case that the sum is not within the predetermined range, the calculation portion 130 of the smartphone 100 determines that the communication state between the smartphone 100 and the vehicle 200 is not normal (or has an error).

Similarly, the communication portion 140 of the smartphone 100 transmits the smartphone-side reference time difference stored in the calculation portion 130 to the remote control determination device 350. Then, the time difference determination portion 341 of the remote control determination device 350 calculates the sum of the transmitted smartphone-side reference time difference and the stored reference time difference.

In the case that the sum is within the predetermined range set in advance, the time difference determination portion 341 determines that the communication state between the vehicle 200 and the smartphone 100 is normal. On the other hand, the sum is not within the predetermined range, the time difference determination portion 341 determines that the communication state between the smartphone 100 and the vehicle 200 is not normal (or has an error).

On the premise that both of the calculation portion 130 of the smartphone 100 and the time difference determination portion 341 of the remote control determination device 350 have determined that the communication state is normal, the acceleration data determination portion 342 determines whether or not the acceleration in the y-axis direction and the acceleration in the z-axis direction output from the communication portion 140 fall within the respective predetermined ranges set in advance (first determination).

In the first determination, the case that the acceleration in the y-axis direction or the acceleration in the z-axis direction does not fall within the respective predetermined ranges is, for example, a case that the smartphone 100 is irregularly swung too strong or too weak.

The finger 511 is away from the screen of the display portion 110 when the smartphone 100 falls out of the operator's hand. In this case, the acceleration data is not transmitted from the communication portion 140. However, if the acceleration data is transmitted, the acceleration portion 120 outputs the acceleration that greatly exceeds the predetermined range at the moment the smartphone 100 falls. Also, the acceleration portion 120 outputs the acceleration that is greatly below the predetermined range since the smartphone is stationary after falling.

Further, the acceleration data determination portion 342 determines whether the increasing or decreasing amount of the acceleration in the y-axis direction and the acceleration in the z-axis direction, which are currently output from the communication portion 140, from the acceleration in the y-axis direction and the acceleration in the z-axis direction previously output is within the predetermined range or not (second determination).

The case that the increasing or decreasing amount of the current acceleration in the y-axis direction and acceleration in the z-axis direction from the previous acceleration in the y-axis direction and the acceleration in the z-axis direction is not within the predetermined range is, for example, a case that the smartphone 100 is irregularly swung too strong or too weak, or the like.

Further, the acceleration data determination portion 342 analyzes data for one cycle for each of the acceleration in the y-axis direction and the acceleration in the z-axis direction output from the communication portion 140, and determines whether the time difference (time of one cycle) between apexes of the accelerations (between maximum values or between minimum values) is within the predetermined range or not (third determination).

The case that the time of one cycle for each of the acceleration in the y-axis direction and the acceleration in the z-axis direction is not within the predetermined range is, for example, a case that the smartphone 100 is swung too fast or too slow, or the like.

Also, the acceleration data determination portion 342 determines whether or not the time difference between the apex of the acceleration in the z-axis direction and the apex of the acceleration in the y-axis direction output from the communication portion 140 is within a predetermined range set in advance (time difference is 0 [msec] if it is normal) (fourth determination).

The case that the time difference between the apex of the acceleration in the z-axis direction and the apex of the acceleration in the y-axis direction is not within the predetermined range is, for example, a case that the operator does not hold the smartphone 100 with a predetermined posture, a case that the acceleration portion 120 is out of order, or the like.

In the case that all of the above four determinations by the acceleration data determination portion 342 are positive (i.e., all of them are determined to be within the respective predetermined ranges), the error determination portion 343 outputs the execution signal to the automatic drive controller 330 to perform the automatic parking operation while the smartphone 100 is being swung periodically.

Accordingly, in the parking assist device 300, the automatic drive controller 330 controls each of the actuators 230 to automatically park the vehicle 200 in the predetermined parking space.

On the other hand, in the case that at least one of the four determinations is determined as negative (i.e., at least one of the determinations is determined not to be within the predetermined range), the error determination portion 343 outputs the stop signal to the automatic drive controller 330 to stop the automatic parking operation regardless of whether the smartphone 100 is being swung or not.

Accordingly, in the parking assist device 300, the automatic drive controller 330 controls each of the actuators 230 to stop the vehicle 200 and the automatic parking operation.

In the case that at least one of the calculation portion 130 of the smartphone 100 and the time difference determination portion 341 of the remote control determination device 350 determines that the communication state is not normal (or has an error), the error determination portion 343 outputs the stop signal to the automatic drive controller 330 to stop the automatic parking operation, so that the automatic parking operation and the vehicle 200 are stopped.

It has been described that the remote control determination system 400 of the present disclosure determines the suitability of the state of the swinging motion of the smartphone 100 in accordance with the result determined by the remote control determination device 350 of the vehicle 200. However, the remote control determination system of the present disclosure may determine, also at the smartphone 100 side, the suitability of the transmission and reception of the data and/or the suitability of the operation of the remote control determination device 350 in the vehicle 200 to stop the automatic parking operation.

Specifically, the acceleration data determination portion 342 of the remote control determination device 350 adds the acceleration in the y-axis direction and the acceleration in the z-axis direction transmitted from the smartphone 100 and relates the sum of the accelerations, which is the result of the addition, to time of the internal clock of the parking assist device 300 (i.e., added time) when the acceleration data determination portion 342 performs the addition. Then, the communication portion 250 transmits the related data.

The communication portion 140 of the smartphone 100 receives the added time and the sum of the accelerations transmitted from the remote control determination device 350. The calculation portion 130 calculates a difference between the added time and the current time of the internal clock in the smartphone 100 to determine whether the difference is within a predetermined range set in advance or not.

In the case that the determination result is positive (i.e., difference between the added time and the current time of the internal clock in the smartphone 100 is within the predetermined range), the sum of the accelerations transmitted from the remote control determination device 350 is verified.

On the other hand, in the case that the determination result is negative (i.e., difference between the added time and the current time of the internal clock in the smartphone 100 is within the predetermined range), the calculation portion 130 determines that the communication state is not normal (or has an error) between the error detector 340 of the remote control determination device or the communication portion 140 of the smartphone 100 and the communication portion 250 of the remote control determination device 350.

In the case that the calculation portion 130 determines that there is an error, the smartphone 100 outputs the signal that indicates the error to the remote control determination device 350, and the error determination portion 343 of the remote control determination device 350 outputs the stop signal to the automatic drive controller 330 to stop the automatic parking operation, so that the automatic parking operation and the vehicle 200 are stopped.

In the case that the determination result from the calculation portion 130 of the smartphone 100 is positive (i.e., difference between the current time of the internal clock of the smartphone 100 and the added time is within the predetermined range), the calculation portion 130 verifies the sum of the accelerations transmitted from the remote control determination device 350. This verification is performed by the acceleration portion 120 detecting the acceleration in the y-axis direction and the acceleration in the z-axis direction and by the calculation portion 130 determining whether or not the stored addition value obtained by adding the acceleration in the y-axis direction and the acceleration in the z-axis direction is coincident with the sum of the accelerations transmitted from the remote control determination device 350.

The addition value obtained by the calculation portion 130 of the smartphone 100 adding the acceleration in the y-axis direction and the acceleration in the z-axis direction is supposed to be coincident with the sum obtained by the acceleration data determination portion 342 of the remote control determination device 350 adding the acceleration in the y-axis direction and the acceleration in the z-axis direction. However, in the case that the added value is not coincident with the sum, it is determined that at least one of the smartphone 100 and the remote control determination device 350 is in a malfunction state where at least one of the smartphone 100 and the remote control determination device 350 may be malfunctioning, out of order, or the like.

In this case, the smartphone 100 outputs the signal that indicates the malfunction or error to the remote control determination device 350, the error determination portion 343 of the remote control determination device 350 outputs the stop signal to the automatic drive controller 330 to stop the automatic parking operation, so that the automatic parking operation and the vehicle 200 are stopped.

According to the remote control determination device 350 and the remote control determination system 400 of the present disclosure described above, the vehicle 200 can be automatically parked by keeping moving or swinging the arm 510 at the predetermined cycle with the finger 511 touching the screen of the display portion 110 of the smartphone 100.

Therefore, the automatic parking operation can be prevented from continuing in the case that the finger 511 is away from the screen when the smartphone 100 is dropped, for example.

Also, the automatic parking operation stops unless the arm 510 is kept being swung at the predetermined cycle even when the finger 511 touches the screen. This can prevent the operator from neglecting to move or swing the smartphone 100 and from being distracted or losing his or her attention during the automatic parking operation.

In addition, the automatic parking operation cannot be started unless the operator keeps swinging his or her arm 510 at the predetermined cycle even if the raindrops or the like fall on the screen when the finger 511 does not touch the screen. Accordingly, it is possible to prevent the automatic parking operation from being accidentally started by the raindrops or the like fallen on or attached to the screen.

Moreover, the motion to keep swinging the arm 510 in the predetermined cycle while contacting the finger 511 on the screen can be performed without looking at the smartphone 100. Accordingly, the operator can keep his or her eyes on the vehicle 200 during the automatic parking operation and pay attention to the moving vehicle 200.

The remote control determination device 350 and the remote control determination system 400 of the present disclosure determine whether or not the arm 510 is periodically swung up and down while the finger 511 is touching the screen of the display portion 110 of the smartphone 100. However, the motion used for the determination in the remote control determination device and the remote control determination system of the present disclosure is not limited to the motion to swing or move the arm up and down periodically and may include a motion to periodically rotate the arm (e.g., with a short stop for each rotation or the like) or a motion to swing or move the arm left and right periodically, for example.

### REFERENCE SIGNS LIST

100 SMARTPHONE (EXAMPLE OF REMOTE CONTROL TERMINAL)
110 DISPLAY PORTION
120 ACCELERATION PORTION
200 VEHICLE
250 COMMUNICATION PORTION
340 ERROR DETECTOR
350 REMOTE CONTROL DETERMINATION DEVICE
400 REMOTE CONTROL DETERMINATION SYSTEM

## Claims

1. A remote control determination device (350) comprising:
a communication portion (250) that is configured to receive an acceleration detected by an acceleration portion (120) of a remote control terminal (100) that is independent of a vehicle (200) when an automatic parking operation is remotely performed for the vehicle (200) through an operation to the remote control terminal (100); and
an error detector (340) that is configured to determine whether or not to remotely perform the automatic parking operation for the vehicle (200) based on the acceleration received by the communication portion (250).

2. The device according to claim 1, wherein the error detector (340) is further configured to determine that there is an error in a case that difference between detection time when the remote control terminal (100) detects the acceleration and time when the vehicle (200) receives the acceleration via the communication portion (250) is not within a predetermined range and to stop the automatic parking operation in response to the determination.

3. The device according to claim 2, wherein the error detector (340) is further configured to determine that there is an error when the acceleration transmitted from the remote control terminal (100) is not within a predetermined range and to stop the automatic parking operation in response to the determination.

4. The device according to claim 2 or 3,
wherein the acceleration portion (120) is configured to detect two accelerations in two directions different from each other, and
wherein the error detector (340) is further configured to calculate sum of the two accelerations transmitted from the remote control terminal (100), to determine that there is an error when the sum is not within a predetermined range, and to stop the automatic parking operation in response to the determination.

5. The device according to one of claims 2 to 4, wherein the error detector (340) is further configured to determine that there is an error when a cycle of the acceleration transmitted from the remote control terminal (100) is not within a predetermined range and to stop the automatic parking operation in response to the determination.

6. A remote control determination system comprising:
the remote control determination device (350) according to one of claims 1 to 5; and
a remote control terminal (100) that is independent of a vehicle (200) and comprises an acceleration portion (120).
